# EUROPÄISCHE PATENTSCHRIFT

(11) **EP 0 932 024 B1**
(45) Veröffentlichungstag und Bekanntmachung des Hinweises auf die Patenterteilung: **08.08.2001**
(21) Anmeldenummer: 99100938.2
(22) Anmeldetag: 20.01.1999
(51) Int. Cl.: G01C 25/00, G01C 9/24

(54) **Verfahren und Anordnung zum Markieren eines Kunststoff-Flüssigkeitsbehältnisses**
Method and device for the marking of a plastic container for liquid
Procédé et appareil pour marquer un récipient en plastique pour liquide

(30) Priorität: 21.01.1998 DE 29800789 U; 28.01.1998 DE 19803126; 20.05.1998 DE 19822646
(43) Veröffentlichungstag der Anmeldung: 28.07.1999
(73) Patentinhaber: BAYERISCHE MASS-INDUSTRIE ARNO KELLER GMBH, 91217 Hersbruck (DE)
(72) Erfinder: Keller, Hans, 91217 Hersbruck (DE); Ott, Georg, 91224 Pommelsbrunn (DE)
(74) Vertreter: Götz, Georg, Dipl.-Ing.

(56) Entgegenhaltungen:
- EP-A- 0 549 901
- DE-C- 4 427 068
- FR-A- 2 682 790
- FR-A- 2 690 862
- US-A- 4 749 749
- US-A- 5 124 859
- PATENT ABSTRACTS OF JAPAN vol. 007, no. 135 (C-170), 11. Juni 1983 & JP 58 049764 A (NIPPON DENSHIN DENWA KOSHA), 24. März 1983
- PATENT ABSTRACTS OF JAPAN vol. 011, no. 098 (M-575), 27. März 1987 & JP 61 248788 A (HITACHI LTD), 6. November 1986
- PATENT ABSTRACTS OF JAPAN vol. 013, no. 455 (M-879), 13. Oktober 1989 & JP 01 176564 A (HITACHI LTD), 12. Juli 1989
- PATENT ABSTRACTS OF JAPAN vol. 012, no. 334 (P-756), 8. September 1988 & JP 63 096752 A (MATSUSHITA ELECTRIC IND CO LTD), 27. April 1988

## Beschreibung

Die Erfindung betrifft eine Libelle für eine Wasserwaage gemäß Oberbegriff des Patentanspruchs.

Die Erfindung betrifft ferner ein Verfahren und eine Anordnung zum Markieren einer Libelle aus transparentem Kunststoff für eine Wasserwaage gemäß Oberbegriffe der Ansprüche 7 und 19.

Zum Markieren von Behältern aus Kunststoff ist es bekannt, im Spritzgußverfahren auf der Behälterwandung Erhöhungen oder Vertiefungen zu erzeugen. Diese sind allerdings verhältnismäßig kontrastarm und damit visuell oft nur schwer erfaßbar. Ferner ist es bekannt, Behältnisse im Tampondruckverfahren zu markieren. Dazu sollte das Behältnis noch ungefüllt sein. Die Form des Behältnisses, insbesondere dessen Hohlraum, muß speziell gestaltet sein. Ein weiterer Nachteil dieses Verfahrens besteht im Mangel an Kratzfestigkeit und an Beständigkeit gegen einzufüllende Medien. Weiter ist das Heißprägen an der Außen- oder Innenseite des Behältnisses bekannt. Nachteilig dabei ist allerdings der erforderliche, große Aufwand. Zudem muß die Form des Behältnisses ebenfalls speziell gestaltet sein. Ferner ist das Einlegen von Drahtringen in den Hohlraum des Behältnisses bekannt, was allerdings einen hohen Aufwand an Geschicklichkeit und Montagefertigkeit erfordert.

Aus dem deutschen Patent DE 44 27 068 C2 ist ein Herstellungsverfahren für Wasserwaagen bekannt, bei dem der Schritt der Markierung der für die Gasblase vorgesehenen Stelle auf der Libelle zeitgleich mit dem Schritt der Feinjustierung der Libelle im Wasserwaagengrundkörper durchgeführt wird. Als Libellenmaterial wird Kunststoff vorgeschlagen, der Pigmente aufweist, die bei Beaufschlagung mit Energie einem Farbumschlag unterliegen. Dabei entstehen die Markierungen für die Gasblasen. Für den Energieeintrag wird das Prinzip der Laser-Materialbearbeitung vorgeschlagen: Über Fokussierung auf die Außen- oder Innenoberfläche der Libellenwandung oder innerhalb des Wandungsmaterials der Libelle werden beispielsweise zwei Markierungsringe erzeugt, und zwar in einer Lage, die der Ausrichtung bzw. Justierung des Wasserwaagenkörpers in einem Halterungsnormal entspricht.

Aus Patent Abstracts of Japan Vol. 007, no. 135 (C-170), 11-06-83 & JP-A-58 04 97 64 (Nippon Denshin Denwakosha) 24-03-83 ist für einen Tintenstrahldrucker eine Tintenflüssigkeit offenbart, die mit Pigmenten zur Absorption von Infrarot- oder Ultraviolett-Licht versehen ist. Die Absorptions-Wellenlänge beträgt für Ultraviolett-Licht 0,2 - 0,4 µm und für Infrarot-Licht 0,7 - 2,6 µm. Als Pigmentmaterial wird auf Carbonylverbindungen, Phenolverbindungen und Carbonsäure verwiesen.

Aus Patent Abstracts of Japan Vol. 011, no. 098 (M-575) 27-03-87 & JP-A-61 24 87 88 (Hitachi Ltd) 06-11-86 ist ein optischer Aufnahmefilm bekannt, der aus mehreren Beschichtungen zusammengesetzt ist. Diese sind so ausgebildet, daß beim Auftreffen von Laserstrahlung Markierungen verbleiben. Eine Aufnahmebeschichtung umfaßt eine Farbstoffschicht mit einem Absorptionsspektrum von 700 - 900 nm, welche auf einer reflektierenden und wärmeabsorbierenden Schicht gebildet ist. Der Farbstoff besitzt ein Absorptionsspektrum im Bereich für Halbleiter-Laserstrahlen, so daß auf dem Aufnahmefilm Markierungen mittels Laserstrahlen gedruckt werden können.

Patent Abstracts of Japan Vol. 013, no. 455 (M-879) 13-10-89 & JP-A-01 17 65 64 (Hitachi Ltd) 12-07-89 beschreiben ein Laser-Markierungsgerät. Ziel ist es, einen Temperaturanstieg einer Flüssigkeits-Kristallmaske aufgrund Bestrahlung mit Laserstrahlen zu begrenzen. Offenbart wird auch die Verwendung eines Pulslasers. Der Reflektionsgrad von Glasbegrenzungen für das Flüssigkeitskristall beträgt bei den nach außen gerichteten Seiten 0 % für die Wellenlänge des verwendeten Lasers.

Der Erfindung liegt die Aufgabe zugrunde, eine Libelle für Wasserwaagen zu schaffen, die bei der Herstellung leicht mit Farbkontrasten für die Gasblase innerhalb der Libelle markierbar ist. Ferner liegt der Erfindung die Aufgabe zugrunde, unter Vermeidung der oben genannten Nachteile ein Verfahren und eine Anordnung zum Markieren transparenter Libellen für Wasserwaagen zu schaffen, die noch nicht in der Anwendungsumgebung integriert sind, sondern erst noch als lose Libellen zur Verfügung stehen. Vor allem soll einen neue Markierungsmethode für Libellen für Wasserwaagen geschaffen werden, bei der die Notwendigkeit einer mechanischen Einwirkung auf die Wandungsoberfläche des Behältnisses entfällt.

Zur Lösung wird auf die im Patentanspruch 1 angegebene Libelle, auf das im Patentanspruch 7 angegebene Libellen-Markierungsverfahren und auf die im Patentanspruch 19 angegebene Libellen-Markierungsanordnung verwiesen. Vorteilhafte Ausgestaltungen ergeben sich aus den abhängigen Patentansprüchen.

Es liegt im Rahmen der Erfindung die Länge der elektromagnetischen Wellen und/oder deren Frequenzspektrum und/oder die Materialparameter bzw. Werkstoffeigenschaften der Pigmente und/oder des Kunststoffes derart zu wählen, daß die Fähigkeit zur Absorption der durch die elektromagnetischen Wellen eingetragenen Energie beim Kunststoff ein Minimum und bei den Pigmenten ein Maximum erreicht. Diese Erfindungsausbildung basiert also auf einer Anpassung der Material- und Energieparameter sowohl an das Kunststoff-Trägermaterial als auch an die Pigment-Zusatzstoffe. Für das Trägermaterial werden zweckmäßig als Kunststoffe Acrylnitril-Butadien-Styrol-Polymere bzw. Acrylnitril-Butadien-Styrol-Polymerisate (ABS), Polymethylmethacrylat (PMMA) und/oder Polycarbonat (PC) verwendet. Als Pigment-Zusatzstoffe kommen Rußpartikel und/oder Iriodin LS 820 (eingetragenes Warenzeichen der Firma MERCK) besonders in Frage. Diese ergeben Absorptionskeime, welche die Einkopplung von Lichtenergie unterstützen. Mit der Fokussierung eines Laserstrahls an einer Pigmentstelle läßt sich, die Einkopplung der Lichtenergie exponentiell bzw. überproportional erhöht gewährleisten. Es entsteht dabei ein Farbumschlag, ohne daß eine Schädigung der Kunststoffmatrix des Trägermaterials erfolgt.

Zur Realisierung der Erfindung lassen sich zweckmäßig Pigmentkörperchen einsetzen, die lichtempfindlich, insbesondere lasersensitiv sind. Diese Pigmente können durch den Eintrag von Lichtenergie beispielsweise im Infrarot- oder Ultraviolettbereich sich in ihrer chemischen Struktur verändern und dabei einem Farbumschlag unterliegen. Daneben liegt es auch im Rahmen der Erfindung, wärmeempfindliche und/oder als Katalysatoren auf das Umgebungsmaterial einwirkende Pigmentkörperchen in das Behältnis-Grundmaterial einzubringen. In jedem Fall erfolgt das Einbringen vor der Energiebeaufschlagung zweckmäßig mit einer solch geringen Dichte, daß die Pigmentkörperchen (noch) nicht visuell sichtbar sind. Die Pigmentkörperchen bilden gewissermaßen "Keime", die sich durch Wärme- oder Energieeintrag aktivieren lassen und beispielsweise in ihrem Volumen in das umgebende Träger-Kunststoffmaterial expandieren. Damit lassen sich zunächst kaum sichtbar oder mikroskopisch klein vorhandene, dunkle Pigmentkörperchen in ihren Ausdehnungen vervielfachen, wodurch die erwünschten, sichtbaren Markierungen erzeugt werden können.

Nach einer vorteilhaften Ausbildung der Erfindung werden als Pigmente oder Kunststoffe (letztere für den Behältnis-Grundkörper) organische Stoffe verwendet, die bei Energieeinstrahlung zur Verkohlung neigen. Als besonders vorteilhaftes Herstellungsmaterial für den Grundkörper des Behältnisses eignet sich das bereits genannte Polycarbonat (PC). Durch externen Energieeintrag mittels elektromagnetischer Wellen, insbesondere Laser, lassen sich im PC geschwärzte oder dunkel kontrastierende Markierungsbereiche erzeugen, nachdem beispielsweise im Spritzguß-Extrusions- und Blasverfahren bei Temperaturen von 275° bis 350° C aus dem noch ungefärbtem PC ein Behältnis-, insbesondere Libellenkörper hergestellt worden ist. Eine besonders günstige Eigenschaft im Zusammenhang mit der vorliegenden Erfindung besteht beim Werkstoff PC in dessen Lasersensivität: Die chemische Struktur des PC läßt sich mit energiereicher Lichtbeaufschlagung, insbesondere durch Laserstrahlen, leicht derart verändern, daß gleichsam "verbrannte" (verkohlte) und damit farblich dunkel kontrastierende Zonen und Bereiche entstehen. Mittels heutiger Laser- und Fokussiertechnik ist es möglich, diese verbrannten Bereiche so präzise lokalisiert zu erzeugen, daß beispielsweise in einem PC-Flüssigkeitsbehältnis an der Innen- oder Außenwandung oder innerhalb der Wandung dünne, und scharf konturierte Markierungsringe erzeugt werden können. Damit läßt sich der Platz kennzeichnen, in dem sich die Gasblase der Libelle bei der gewünschten Lage befinden muß. Durch den Einfall von Lichtenergie in die PC-Struktur der erfindungsgemäßen Libelle ist es denkbar, daß sich Kohlenstoffatome abspalten, was zur Entstehung des Markierungskontrastes bzw. zur Verkohlung beiträgt Bekanntlich wird PC schwarz, wenn es gezielt "verbrannt" bzw. verkohlt wird. Bei der Markierung mittels Laser oder einer sonstigen Lichtquelle ist die Menge an einzutragender Energie so zu dimensionieren, daß eine möglichst geringe Materialschädigung stattfindet Vorzugsweise soll lediglich die bei der Energiebaufschlagung in der PC-Struktur abgeschiedenen Kohlenstoffatome oxidieren.

Zur Lösung dieser Problematik wird bei dem eingangs genannten Markierungsverfahren, bei dem mittels einer Optik die Energieeinstrahlung auf einen bestimmten Ort der Außen- oder Innenoberfläche oder im Wandungsmaterial der Behältniswandung fokussiert wird, gemäß einer Erfindungsausbildung vorgeschlagen, daß der Ort anfänglich mit einer hohen Leistungsdichte bestrahlt wird, bis dort ein Absorptionskeim erzeugt ist, und dann die Leistungsdichte bzw. Strahlungsleistung zum Verfärben des Absorptionskeimortes variiert, insbesondere erniedrigt wird. Diese Lösungsalternative im Rahmen der allgemeinen erfinderischen Idee basiert also auf einer Anpassung der zeitlichen Folge des Energieeintrags.

Bezüglich der genannten Problematik wird nach einer Erfindungsausbildung bei dem eingangs genannten Markierungsverfahren vorgeschlagen, daß eine Relativbewegung zwischen dem Behältnis und einer Quelle der Energieeinstrahlung erzeugt wird, und deren Strahlungsleistung im Pulsbetrieb ausgelöst wird, wobei in der Behältniswandung diskrete Einwirkungsflecken- entstehen, und die Einwirkungsdauer der Energieeinstrahlung und/oder die Relativgeschwindigkeit zwischen dem Behältnis und der Strahlungsquelle über die Zeit derart variiert werden, daß benachbarte Einwirkungsflecken einander überlappen bzw. überdecken. Nach diesem Konzept wird also darauf geachtet, daß Pulsfrequenz und Energieverlauf der elektromagnetischen Strahlung bzw. Wellen sowie die Markierungsgeschwindigkeit aneinander und an das oder die Materialien (Kunststoff-Trägermaterial gegebenenfalls mit Zusatz-Pigmenten) angepaßt sind. Vor allem das Kunststoff-Grundmaterial darf nicht oder nur gering geschädigt werden. Ein zweckmäßiger Leistungseintrag in das Kunststoffmaterial liegt in einer Größenordnung von ca. 50 Watt Dabei ist es zweckmäßig, eine so geringe Wiederholrate beim Pulsbetrieb zu wählen, daß eine Abstimmung mit der Geschwindigkeit des energiereichen Markierungsstrahls gegeben ist. Als Pulsfrequenz haben sich in der Praxis 4 kHz, als Markierungsgeschwindigkeit 200 mm /Sek. als geeignet erwiesen. Damit läßt sich eine Punktmarkierung und/oder eine Koordinaten-Matrixbeschriftung erzeugen.

Bei der Markierung von Behältnissen für Flüssigkeiten, insbesondere Libellen für Wasserwaagen, ergibt sich in Produktionsbetrieben die Anforderung nach einer möglichst rationellen vor allem zeitsparenden Herstellung. Dazu wird bei einem Markierungsverfahren mit den eingangs genannten Merkmalen gemäß Erfindung die gleichzeitige Verwendung eines Verbunds von zwei oder mehr Energiestrahlen vorgeschlagen, deren Abstand dem der anzubringenden Markierungen entspricht, wobei der Verbund der wenigstens zwei Energiestrahlen bezüglich einer mittleren Querschnittsebene des Behältnisses symmetrisch bzw. äquidistant positioniert wird. Indem die beiden vorzugsweise parallel verlaufenden Energiestrahlen hinsichtlich Verstellbewegungen starr aneinander gekoppelt sind, lassen sie sich bezüglich der querschnittlichen Mittelebene des Behältnisses so verfahren, daß letzere die Abstandsstrecke zwischen beiden Energiestrahlen mittig schneidet.

Damit erschließt sich eine vorteilhafte Anwendung auf Röhrchen-Libellen, die durch Spritzen auf einen tonnenförmigen Kern vor allem an ihrer Innenseite leicht tonnenförmig ausgebaucht bzw. ausgewölbt sind, wobei der Kern im Wege der Zwangsentformung entfernt wird (vgl. europäische Patentschrift EP 0 455 979 B1). Ist die entstehende Ausbauchung oder Krümmung bezüglich einer mittleren Querschnittsebene der Libelle symmetrisch, besteht in diesem Zusammenhang eine besondere Ausbildung des erfindungsgemäßen Verfahrens darin, daß mit einer Meßeinrichtung ein Sohle- oder Scheitelbereich oder -punkt der Krümmung bestimmt wird, und der Verbund der beiden Energiestrahlen bezüglich der durch den Sohle- bzw. Scheitelpunkt verlaufenden Mittelebene symmetrisch bzw. äquidistant positioniert wird. Mit der Bestimmung des Sohle- oder Scheitelpunkts ist in Kombination mit dem Verbund der beiden Energiestrahlen eine Handhabe geschaffen, diese mit gleichen Abständen zur Mittelebene zu positionieren. Damit ist die Markierung und die entsprechende Gasblasen-Stelle hinsichtlich der Libellengeometrie für das spätere Einsetzen in die Wasserwaage genau justiert.

Dieser Gedanke läßt sich nach einer weiteren Ausbildung der Erfindung zur einer Unterteilung des Markierungsverfahrens in zwei Phasen weiterentwickeln: In einer ersten Phase wird der Strahlenverbund beispielsweise durch Einstellung der Parameter Wellenlänge, Leistung, Fokussierung/Leistungsdichte oder pulsierender Strahlungsbetrieb so eingestellt, daß die wenigstens zwei Energiestrahlen an der gekrümmten Behältniswandung reflektiert werden. Gleichzeitig wird der Strahlenverbund entlang der Behältniswandung verstellt, wobei eine Meßeinrichtung mit wenigstens zwei Photosensoren mitbewegt wird, die einen einheitlichen Abstand zu je einem der Energiestrahlen aufweisen und jeweils für die Aufnahme eines reflektierten Energiestrahls angeordnet und ausgebildet sind; der Verband aus Energiestrahlen-Verbund und Photosensorik wird solange entlang der gekrümmten Behältniswandung hin- und/oder herbewegt, bis die Photosensoren übereinstimmende Strahlenreflexionen an ihren Ausgängen signalisieren. In einer nachfolgenden bzw. zweiten Phase wird der Strahlenverbund gegenüber der Behältniswandung für eine ausreichende Zeit festgestellt, und die Betriebsparameter so verändert, daß es in und/oder an der gekrümmten Behältniswandung zum Fokussieren und zur Absorption der wenigstens zwei Energiestrahlen kommt. In der Folge entsteht - gegebenenfalls an Pigmentkörperchen - der Farbumschlag aufgrund chemischer Veränderung bzw. Verkohlung.

Es bedeutet eine aufwendige und umständliche Libellenherstellung, wenn sich die Libelle dabei zu ihrer Markierung bereits in einer Aussparung des Wasserwaagenkörpers, und dieser sich auf einem Halterungsnormal befinden müssen. Zudem ist kein konkretes Kunststoffmaterial in dem vorveröffentlichten Patent genannt

Es ergibt sich so die obige Erfindungsaufgabe, ein als Wasserwaagen-Libelle taugliches Flüssigkeitsbehältnis zu schaffen, das bei der Herstellung leicht mit Farbkontrasten für die Gasblase markierbar ist.

Zur Lösung wird bei einem Flüssigkeitsbehältnis mit den eingangs genannten Merkmalen erfindungsgemäß vorgeschlagen, daß der Grundkörper des Behältnisses Polycarbonat (PC) als Herstellungsmaterial aufweist, und im Polycarbonat des Behältnisses ein oder mehrere, durch Licht- oder externen Energieeintrag geschwärzte oder dunkel kontrastierende Markierungsbereiche angeordnet sind. Im ungefärbten Zustand ist PC ein glasklarer, transparenter Werkstoff, der neben guten elektrischen Isoliereigenschaften vor allem eine hervorragende Dimensionsstabilität besitzt. Es läßt sich nach dem Spritzguß-Extrusions- und Blasverfahren bei Temperaturen von 275° bis 350° C leicht zu Libellenkörpem verarbeiten.

Eine im vorliegenden Zusammenhang mit Wasserwaagen-Libellen besonders günstige Eigenschaft von PC besteht in dessen Lasersensitivität: Die chemische Struktur des PC läßt sich mit energiereicher Lichtbeaufschlagung, insbesondere durch Laserstrahlen, leicht derart verändern, daß gleichsam "verbrannte" und damit farblich dunkel kontrastierende Zonen und Bereiche entstehen. Mittels heutiger Laser- und Fokussiertechnik ist es möglich, diese verbrannten Bereiche so präzise lokalisiert zu erzeugen, daß beispielsweise in einem PC-Flüssigkeitsbehältnis an der Innen- oder Außenwandung oder innerhalb der Wandung dünne, scharfe Markierungsringe erzeugt werden können. Diese können den Platz markieren, in dem sich die Gasblase der Libelle bei der gewünschten Lage befinden muß. Durch den Einfall von Lichtenergie in die PC-Struktur der erfindungsgemäßen Libelle ist es denkbar, daß sich Kohlenstoffatome abspalten, was zur Entstehung des Markierungskostrastes beiträgt. Bekanntlich wird PC schwarz, wenn es gezielt "verbrannt" wird. Bei der Markierung mittels Laser oder einer sonstigen Lichtquelle ist die Menge an einzutragender Energie so zu dimensionieren, daß eine möglichst geringe Materialschädigung stattfindet. Es sollen lediglich die bei Energiebeaufschlagung in der PC-Struktur abgeschiedenen Kohlenstoffatome oxidieren.

Nach einer besonderen Ausbildung der Erfindung ist das Behältnis bzw. dessen Grundkörper von Pigmentkörperchen durchsetzt, die lichtempfindlich, insbesondere lasersensitiv sind. Diese Pigmente können durch den Eintrag von Lichtenergie sich in ihrer chemischen Struktur verändern und dabei einem Farbumschlag unterliegen. Als Pigmentkörperchen besonders geeignet ist Ruß. Daneben liegt es auch im Rahmen der Erfindung, wärmeempfindliche Pigmentkörperchen in das PC-Grundmaterial für die erfindungsgemäße Libelle einzubringen. Die Pigmentkörperchen bilden gewissermaßen "Keime", die sich durch Wärme- oder Energieeintrag aktivieren lassen und beispielsweise in ihrem Volumen in das umgebende Trägermaterial expandieren. Damit lassen sich an sich zunächst kaum sichtbar oder mikroskopisch klein vorhandene dunkle Pigmentkörperchen in ihren Ausdehnungen vervielfachen, wodurch sichtbare Markierungen erzeugt werden können.

Weitere Einzelheiten, Merkmale, Vorteile und Wirkungen auf der Basis der Erfindung ergeben sich aus der nachfolgenden Beschreibung bevorzugter Ausführungsformen der Erfindung sowie aus den Zeichnungen. Diese zeigen in:
- Fig. 1: ein das Schema einer erfindungsgemäßen Anordnung zur Ausführung des Markierungsverfahrens,
- Fig. 2: ebenfalls schematisch eine zweite erfindungsgemäße Anordnung zur Ausführung des Markierungsverfahrens
- Fig. 3: den Verlauf des Absorptionsgrads des Behältnis-Grundkörpers und der zusätzlichen Pigmentkörperchen, über die Wellenlänge einer Laserstrahlung, und
- Fig. 4: ausschnittsweise eine eben abgewickelte Ansicht auf den Behältnis-Grundkörper mit darauf teilweise erfindungsgemäß hergestellter Markierung.

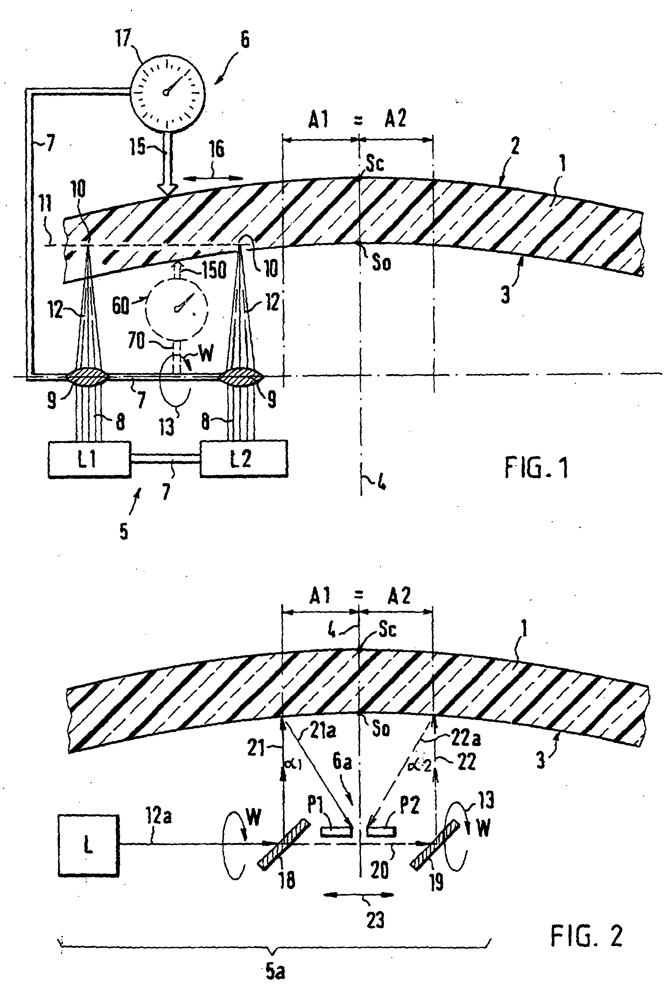

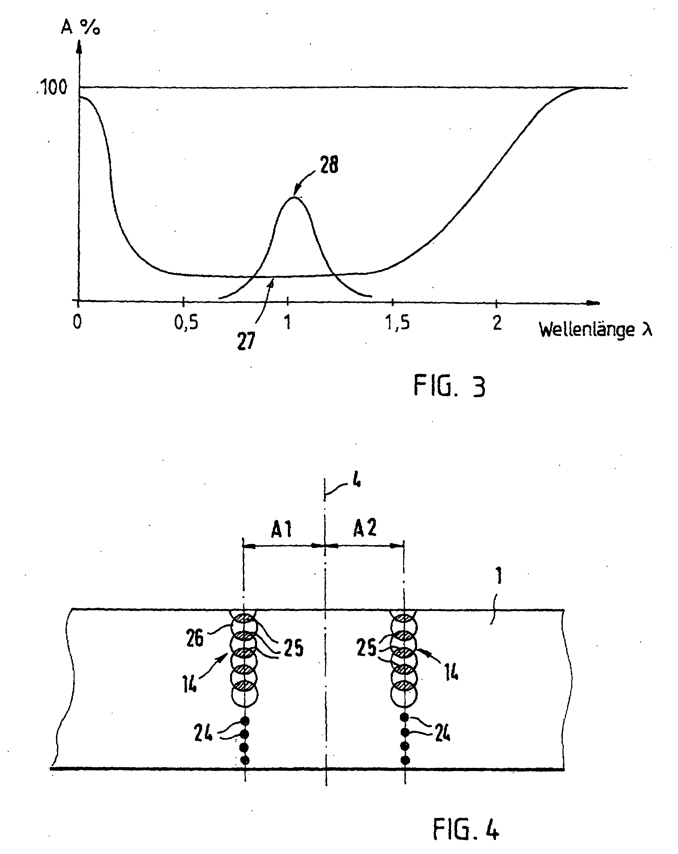

In Figur 1 ist im axialen Längsschnitt die Wandung 1 einer Wasserwaagen-Libelle ausschnittsweise dargestellt. Sowohl die Außenseite 2 als auch die Innenseite 3 der Wandung 1 sind gemäß einem Radius (außen) konvex und (innen) konkav leicht gekrümmt bzw. tonnenartig gewölbt. Diese Krümmungen erreichen zwischen den (nicht dargestellten) Stirnseiten der (röhrchenförmigen) Libelle ihr jeweiliges Maximum im Scheitelpunkt Sc auf der Außenseite 2 und im Sohlepunkt So auf der Innenseite 3. Durch diese beiden Punkte verläuft auch die querschnittliche Mittelebene 4, bezüglich welcher die Krümmung vorzugsweise symmetrisch ist. Die Libellenwandung 1 ist aus transparentem Kunststoff, vorzugsweise Polycarbonat, hergestellt. Um auf deren Außen- und/oder Innenseite 2, 3 und/oder in ihren Inneren Markierungen für die Libellen-Gasblase zu erzeugen, sind eine Laser-Materialbearbeitungseinrichtung 5 und eine damit bewegungsübertragend gekoppelte Meßeinrichtung 6 angeordnet. Die Kopplung ist durch eine mechanische Verbindung 7 zwischen beiden schematisch angedeutet. Die Laser-Materialbearbeitungseinrichtung 5 weist zwei - ebenfalls über eine mechanische Verbindung 7 bewegungsübertragend gekoppelte - Laserquellen L1, L2 auf, die auf die Innenseite 3 der Libellenwandung 1 gerichtet sind. Die daraus austretenden Lichtstrahlen 8 werden über eine jeweils zugeordnete Spiegeleinrichtung oder sonstigen Optik 9 auf Brennpunkte 10 fokussiert, die gemäß Figur 1 in das Innere der Libellenwandung 1 gelegt sind, aber je nach Einstellung der Optiken 9 sich auch auf der Außen- oder Innenseite 2, 3 der Libellenwandung 1 befinden können. Vorzugsweise ist die Fokussierung derart, daß sich die beiden Brennpunkte 10 bezüglich der (nicht gezeichneten) Mittelachse der Libelle auf gleichem radialen Niveau 11 befinden. Die Optiken 9 bestehen gemäß dargestelltem Beispiel hauptsächlich aus Fokussier-Linsen, können aber auch mit (nicht dargestellten) Spiegeln oder sonstigen Reflektoren realisiert sein. Damit die gewünschte Markierung in der röhrenförmigen Libellenwandung 1 ringartig um die Röhrenmittelachse herum erstreckt erzeugt werden, werden der Libellenwandung 1 oder den Optiken 9 und damit den fokussierten Lichtstrahlen 12 eine Drehung 13 mit einer bestimmten Winkelgeschwindigkeit ω erteilt. Mit dieser Winkelgeschwindigkeit laufen dann auch die Brennpunkte 10 satelittenartig um die Mittelachse der Röhrchen-Libelle. In der Regel ist es erwünscht, daß die kreisringartigen Markierungen 14 (vgl. weiter unten Figur 4) für die Gasblase beidseitig der mittleren Querschnittsebene 4 mit jeweils gleichem Abstand A1, A2 davon erzeugt werden. Dazu müssen die fokussierten Lichtstrahlen 12 mit ihren jeweiligen Brennpunkten 10 bezüglich der mittleren Querschnittsebene 4 zu deren beiden Seiten entsprechend symmetrisch mit übereinstimmenden Abständen A1, A2 davon positioniert werden. Um dies zu erreichen, wird mit der uhrenartigen Meßeinrichtung 6 der von der mittleren Querschnittsebene 4 durchsetzte Scheitelpunkt Sc auf der Außenseite 2 der Libellenwandung 1 detektiert. Dazu ist die Meßeinrichtung 6 beispielsweise mit einer federbelasteten Oberflächen-Abtasteinrichtung 15 versehen, mittels welcher sich das radiale Niveau der Außenseite 2 relativ zur mittleren Längsachse der Libelle bestimmen läßt. Ist nach Hin- oder Herbewegung 16 des Verbands aus Meßeinrichtung 6 mit Laser-Materialbearbeitungseinrichtung 5 die Abtasteinrichtung 15 auf den Scheitelpunkt Sc angelangt, so läßt sich dies an der Meßuhr 17 der Meßeinrichtung 6 ablesen. Die Laserquellen L1, L2 nebst den fokussierten Lichtstrahlen 12 sowie Brennpunkten 10 sind dann mit übereinstimmenden Abständen A1, A2 zu beiden Seiten der Querschnittsebene positioniert. Die Laserquellen L1, L2 können dann in ihrer Ausgangsleistung soweit hochgefahren werden, und/oder ihre Wellenlängen so variiert werden, daß es nun zu einer Absorption der eingetragenen Lichtenergie im Kunststoffmaterial der Libellenwandung 1 kommt. Auf diese Weise läßt sich darin ein Farbumschlag erzeugen, vorzugsweise unterstützt durch Pigmente als Zusatzkörperchen, die sich bei Beaufschlagung mit Lichtenergie als Pigmentkeime aktivieren. Dieser Farbumschlag - mit oder ohne Pigmente - erzeugt je nach Intensität oder zeitlichen Verlauf der eingetragenen Lichtenergie kontrastreiche, dauerhafte Markierungen.

Zwischen der Innen- und Außenseite der Wandung 1 können Parallelitätsfehler entstehenen. Damit diese sich nicht auf die Ermittlung der Mittelebene 4 auswirken, ist es auch zweckmäßig, wie in Fig. 1 gestrichelt angedeutet, mit einer innen angeordneten und über eine Bewegungsverbindung 70 mit den Optiken 9 und den Laserquellen L1,L2 gekoppelten Meßeinrichtung 60 und deren Abtasteinrichtung 150 die Innenseite 3 abzutasten und den innenliegenden Sohlepunkt So mit durchgehender Mittelebene 4 zu ermitteln. Dem läßt sich insbesondere mit der in diesem Sinne konkretisierten Anordnung nach Fig. 2 Rechnung tragen.

Gemäß Figur 2 kann die Bestimmung des Scheitelpunkts Sc oder des Sohlepunkt So mit einer konstruktiv vereinfachten Meßeinrichtung 6a erfolgen, die im wesentlichen aus zwei Photoempfängern P1, P2 besteht. Die optoelektronische Meßeinrichtung 6a wirkt ebenfalls mit einer Laser-Materialbearbeitungseinrichtung 5a zusammen, die sich im wesentlichen durch die serielle Anordnung zweier Spiegel 18, 19 auszeichnet. Diese dienen zur Umlenkung eines achsparallel verlaufenden, Lichtstrahles 12a aus einer einzelnen Laserquelle L. Der in Richtung dieses Lichtstrahles 12a zuerst angeordnete Spiegel 18 ist teilweise durchlässig, so daß von ihm ein in seiner Intensität bzw. Energiedichte verminderter Teillichtstrahl 20 zum zweiten, nicht durchlässigen Spiegel 19 gelangt. Beide Spiegel sind gegenüber dem Lichtstrahl 12a bzw. dem Teillichtstrahl 20 jeweils aus der Laserquelle L schräggestellt, beispielsweise im Winkel von 45°. Dadurch entsteht jeweils ein mit 90° umgelenkter Lichtstrahl 21, 22 die beide aufgrund Einstellung bestimmter Parameter wie die Energiedichte, Wellenlänge, Laserart, Fokussierung usw. unmittelbar an der Innenseite 3 der Libellenwandung 1 reflektiert werden. Es resultieren daraus die Reflexionsstrahlen 21a, 22a. Aufgrund der oben beschriebenen tonnenartigen, konkaven Wölbung bzw. Krümmung der Innenseite 3 der Libellenwandung 1 ergeben sich Reflexionswinkel α1, α2, wobei die Innenseite 3 der Libellenwandung 1 aufgrund ihrer konkaven Wölbung wie ein zentrierender Hohlspiegel wirkt. Da also die Reflexionsstrahlen 21a, 22a auf einen Sammel- bzw. Brennpunkt der Hohlspiegel-Krümmung hin konzentriert werden, sind dementsprechend die beiden Photoempfänger P1, P2 einander unmittelbar benachbart zwischen den beiden Spiegeln 18, 19 angeordnet, wobei sie zu jedem bzw. zum entsprechenden Umlenkstrahl 21 bzw. 22 denselben Abstand aufweisen. Nun wird - analog der Hin- und Herbewegung 16 des Laser-Meßeinrichtungsverbundes 5, 6 - auch hier dem Verbund aus Laserquelle L, Spiegeln 18, 19 und Photoempfängern P1, P2 eine Hin- und Herbewegung 23 solange erteilt, bis an den Ausgängen der Photoempfänger P1, P2 sich eine Übereinstimmung in den Reflexionswinkeln α1, α2, ableiten läßt. Dies bedeutet, daß die Umlenkstrahlen 21, 22 übereinstimmende Abstände gegenüber der Mittel-Querschnittsebene 4 aufweisen und damit bezüglich des Scheitelpunkts Sc auf der Außenseite 2 oder des Sohlepunkts So auf der Innenseite 3 der Libellenwandung 1 symmetrisch angeordnet sind. Im weiteren Schritt werden nun die Parameter wie z.B. Wellenlänge, Strahlungsleistung und -intensität, Frequenzspektrum, Pulsfrequenz, Laserart usw. bei der Laserquelle L so variiert, daß eine Umstellung vom bisherigen Reflexionsbetrieb auf Absorptionsbetrieb erfolgt. Zusätzlich können auch (nicht gezeichnete) Sammellinsen in die Strahlengänge der Umlenkstrahlen 21, 22 eingefügt werden, um eine Fokussierung auf der Außen- oder Innenseite 2, 3 oder im Inneren der Libellenwandung 1 zu erreichen und wie oben beschrieben einen Farbumschlag zu erzeugen. Dabei muß der Verbund aus den Komponenten L, 18, 19, P1, P2 in seiner Positionierung symmetrisch gegenüber der Querschnitts-Mittelebene 4 arretiert sein. Dann sind die Wegstrecken von den Umlenkspiegeln 18, 19 gleich groß, und die von der Innenseite 3 ausgehenden Reflexionsstrahlen 21a, 22a erreichen die Photodetektoren P1, P2 mit annähernd gleicher Phase. Deren Ausgangssignale lassen sich also so zusammensetzen, daß der resultierende Verlauf dem aus der Laserquelle L entspricht. Wenn der erste, teildurchlässige Spiegel 18 nur etwa die Hälfte der auftreffenden Lichtenergiemenge in den Umlenkstrahl 21 umwandelt und die andere Hälfte zum vollreflektierenden Spiegel 19 durchläßt, dann dürften bei Erreichen der Symmetrieposition mit A1 = A2 die Ausgangssignale der Photoempfänger P1, P2 auch dem Betrag nach übereinstimmen. Mithin läßt sich durch optoelektronische Abstandsmessung von der Mittel-Querschnittsebene 4 und durch einfache Auswertung und/oder Vergleich der Photoempfänger-Ausgangssignale die erwünschte Symmetrieposition für die Markierungsringe 14 leicht feststellen. Mit der Optik- und Photoempfänger -Anordnung 18,19, P1, P2 gemäß Fig.2 läßt sich die Innenseite 3 der Libellenwandung 1 besonders leicht zur Ermittlung der Lage der Mittelebene 4 abtasten, da diese Anordnung sich dabei außerhalb der Libelle befinden kann.

Im Diagramm der Figur 3 ist längs Abszisse die Wellenlänge λ und längs der Ordinate der Absorptionsgrad A in % aufgetragen. Außerhalb des Bereichs der Wellenlängen zwischen 0,5 und 2 geht der Absorptionsgrad des Kunststoffmaterials für die Libellenwandung 1 gegen 100 %, während er innerhalb des genannten Bereichs ein Minimum 27 erreicht. Indem dem Libellenkörper Kunststoffpigmente, beispielsweise Iriodin LS 820, zugesetzt werden, entstehen Absorptionskeime für den Wellenlängenbereich λ = 1 wo der Pigment-Absorptionsgrad ein Maximum 28 aufweist. Nun kann der Parameter Wellenlänge λ in der Laserquelle beispielsweise bei dem anhand Figur 2 erläuterten Verfahren in der zweiten Phase mit Absorptionsbetrieb so eingestellt werden, daß gezielt mit einer Wellenlänge von λ = 1 der Iriodin-Absorptionskeim angesprochen wird. Damit wird der Vorteil erzielt, daß der den Pigmentkörper "Iriodin" umgebende Kunststoff weitgehend unbeschädigt bleibt, trotz hochenergetischer Lichteinstrahlung.

Gemäß Figur 4, in der die röhrenartige Libellenwandung 1 eben abgelegt dargestellt ist, sind einzelne Pigmentkörper 24 dem Kunststoffmaterial der Libellenwandung 1 zugesetzt. Diese können entsprechend Figur 3 mit bestimmter Wellenlänge von einer Laserquelle L, L1, L2 so bestrahlt werden, daß sie die Energie absorbieren und dabei expandieren. Im Pulsbetrieb kann die Dauer der einzelnen Laser-Impulse so eingestellt und die Winkelgeschwindigkeit ω (vgl. Figur 1 und 2) so gewählt werden, daß den Pigmentkörperchen 24 zu ihrer Volumenexpansion so viel Zeit bleibt, daß sie sich in der Folge mit benachbarten überdecken, wobei Überlappungsbereiche 25 entstehen. Dazu ist es von Vorteil, daß die Pigmentkörperchen 24 regelmäßig hintereinander in ringartig verlaufenden Reihen um die Mittellängsachse der röhrenförmigen Libellenwandung 1 im Kunststoffmaterial eingebettet sind. Zweckmäßig sind zwei Pigmentringe bzw. Markierungen 14 in gleichen Abständen A1, A2 zur Mittelquerschnittsebene 4 angeordnet. Praktische Erprobungen haben gezeigt, daß pigmentierte Kunststoffe grundsätzlich zu kontrastreicheren Markierungen führen, insbesondere wenn die Pigmentkörperchen 24 gemäß Figur 4 aneinandergereiht und gemäß Figur 3 mit Energie beaufschlagt werden. Durch Anpassung der Parameter für Laserlichtquellen können neben leeren auch bereits gefüllte und dicht verschlossene Behältnisse so markiert werden. Zudem lassen sich durch Optimierung der Optiken für elektromagnetische Wellen, insbesondere Laserlicht, sowie durch Anpassung der Materialparameter Markierungen erzeugen, die von der Außenseite 2 durch die Libellenwandung 1 hindurch bis zu Innenseite 3 gehen. Dadurch können z.B. bei Behältern, bei denen Flüssigkeitsstände genau abgelesen werden müssen, Parallaxenfehler sowie eine Beeinflussung der Flüssigkeit vermieden werden. Auch die geometrische Form der Wandoberfläche wird nicht beeinflußt.

Die Erfindung ist nicht auf das Verfahren unter Verwendung von Pigmentzusätzen beschränkt. So können die Absorptionskeime 26 gemäß Figur 4 im Kunststoffmaterial der Libellenwandung 1 durch Stoß- bzw. Pulsbetrieb der Laserquelle bezüglich ihrer Leistungsdichte erzeugt werden. Dabei werden die mit Energieeintrag beaufschlagten Brennflächen so bemessen, daß einander benachbarte sich mit den Überlappungsbereichen 25 überdecken. Auch hierdurch läßt sich eine ausreichend konturscharfe Markierung erzeugen. Dazu ist es zweckmäßig, daß Spektrum der elektromagnetischen Strahlung mit dem zu markierenden Kunststoff abzustimmen.

## Patentansprüche

1. Libelle für eine Wasserwaage oder sonstige Lageprüfinstrumente, hergestellt mit einem Flüsssigkeits-Behältnis aus transparentem Kunststoff, wobei wenigstens zwei voneinander beabstandete Markierungen (14) durch Licht- oder externen Energieeintrag mittels elektromagnetischer Wellen, insbesondere mittels Laserstrahlung (8,12,12a), an, auf und/oder in der Wandung (1) des Behältnisses für eine darin schwimmende Libellen-Gasblase angebracht sind, **dadurch gekennzeichnet, daß** der Grundkörper des Behältnisses Polycarbonat als Herstellungsmaterial aufweist, und im Polycarbonat zwei, durch den Licht- oder externen Energieeintrag in den Grundkörper geschwärzte oder dunkel kontrastierende Markierungsbereiche angeordnet sind.

2. Libelle nach Anspruch 1, dadurch gekennzeichnet, daß die Markierungsbereiche gegenüber der Polycarbonat-Ausgangsstruktur des Grundkörpers chemisch verändert sind.

3. Libelle nach Anspruch 1 oder 2, dadurch gekennzeichnet, daß sein Grundkörper von lichtempfindlichen Pigmentkörperchen durchsetzt ist.

4. Libelle nach Anspruch 3, dadurch gekennzeichnet, daß die Pigmentkörperchen ganz oder teilweise aus Ruß sind.

5. Libelle nach Anspruch 3 oder 4, dadurch gekennzeichnet, daß die Pigmentkörperchen eine auf Wärme- und/oder Licht-, insbesondere Lasereinwirkung, ansprechende Struktur aufweisen.

6. Libelle nach einem der Ansprüche 3 bis 5, dadurch gekennzeichnet, dass der Grundkörper des Libellen-Behältnisses anstelle von Polycarbonat als Herstellungsmaterial Acrylnitril-Butadien-Styrol-Polymere, Acrylnitril-Butadien-Styrol-Polymerisate und/oder Polymethylmethacrylat aufweist.

7. Verfahren zum Markieren einer Libelle aus transparentem Kunststoff für eine Wasserwaage nach einem der vorangehenden Ansprüche, indem wenigstens zwei voneinander beabstandete Markierungen (14) durch Energieeinstrahlung mittels elektromagnetischer Wellen, insbesondere mittels Laserstrahlung (8,12,12a), an, auf und/oder in der Wandung (1) des Behältnisses für eine darin schwimmende Libellen-Gasblase erzeugt werden, **gekennzeichnet durch** die gleichzeitige Verwendung eines Verbunds (5,7;5a,21,22) von wenigstens zwei Energiestrahlen (8,12), deren Abstand dem der Markierungen (14) entspricht, wobei der Verbund (5,7) der beiden Energiestrahlen (8,12) bezüglich einer querschnittlichen Mittelebene (4) des Behältnisses symmetrisch beziehungsweise äquidistant (A1,A2) positioniert wird.

8. Verfahren nach Anspruch 7, wobei die Wandung (1) des Behältnisses auf ihrer Innen- und/oder Außenseite (2,3) mit einer Ausbauchung oder Krümmung gestaltet ist, die bezüglich der mittleren Querschnittsebene (4) symmetrisch verläuft, dadurch gekennzeichnet, daß mit einer Meßeinrichtung (6) ein Sohle- oder Scheitelpunkt (So,Sc) der Krümmung bestimmt wird, und der Verbund (5,8,12;5a,21,22) der beiden Energiestrahlen (21,22) bezüglich der durch den Sohle- beziehungsweise Scheitelpunkt (So,Sc) verlaufenden Mittelebene (4) symmetrisch beziehungsweise äquidistant (A1,A2) positioniert wird.

9. Verfahren nach Anspruch 8, dadurch gekennzeichnet, daß die Meßeinrichtung mit dem Strahlenverbund (5,7) starr mitbewegt wird.

10. Verfahren nach Anspruch 9, dadurch gekennzeichnet, daß in einer ersten Phase der Strahlenverbund (5,7;5a,21,22) zur Reflexion (21a,22a) der wenigstens zwei Energiestrahlen (21,22) an der gekrümmten Behältniswandung (1) betrieben und daran entlang verstellt wird, eine Meßeinrichtung mit wenigstens zwei Photosensoren (P1,P2) verwendet wird, die je zu einem der Energiestrahlen (21,22) im einheitlichen Abstand und für die Aufnahme eines reflektierten Energiestrahles (21a,22a) angeordnet sind, und der Verbund (5a,21,22) aus Energiestrahlen (21,22) mit den diesen jeweils zugeordneten Photosensoren (P1,P2) solange entlang der gekrümmten Behältniswandung (1) hin- und/oder herbewegt (23a) wird, bis die Photosensoren (P1,P2) einander entsprechende oder übereinstimmende Strahlenreflexionen (21a,22a) signalisieren, und daß in einer zweiten Phase der Strahlenverbund (5a,21,22) gegenüber der Behältniswandung (1) arretiert und zur Absorption (26) und/oder zum Fokussieren der wenigstens zwei Energiestrahlen (21,22) an oder in der gekrümmten Behältniswandung (1) betrieben wird.

11. Verfahren nach einem der vorangehenden Ansprüche, wobei der Kunststoff zumindest bereichsweise mit Pigmenten (24) versehen ist, dadurch gekennzeichnet, dass die Länge (λ) der elektromagnetischen Wellen und/oder die Materialparameter beziehungsweise Werkstoffeigenschaften der Pigmente (24) und/oder des Kunststoffes derart gewählt werden, daß die Fähigkeit zur Absorption der durch die elektromagnetischen Wellen eingetragenen Energie beim Kunststoff ein Minimum (27) und bei den Pigmenten (24) ein Maximum (28) beträgt.

12. Verfahren nach Anspruch 11, dadurch gekennzeichnet, daß als Pigmente Rußpartikel und/oder Iriodin® und/oder als Katalysatoren auf das umgebende Material einwirkende Partikel verwendet werden.

13. Verfahren nach einem der vorangehenden Ansprüche, dadurch gekennzeichnet, daß als Kunststoff oder Pigmente (24) organische Stoffe verwendet werden, die bei Energieeinstrahlung, auch bei Lichteinstrahlung im Infrarot- oder Ultraviolettbereich, zur Verkohlung oder sonstigen Verdunkelung oder Verfärbung neigen.

14. Verfahren nach einem der vorangehenden Ansprüche, wobei mittels einer Optik (9) die Energieeinstrahlung auf einen bestimmten Ort (10) der Außen- oder Innenoberfläche (2,3) oder im Wandungsmaterial der Behältniswandung (1) fokussiert wird, dadurch gekennzeichnet, dass der Ort (10) anfänglich mit hoher Leistungsdichte bestrahlt wird, bis ein Absorptionskeim (26) entstanden ist, und dann die Leistungsdichte zum Verfärben des Ortes (10) variiert oder erniedrigt wird.

15. Verfahren nach einem der vorangehenden Ansprüche, dadurch gekennzeichnet, dass eine Relativbewegung zwischen dem Behältnis und einer Quelle (L,L1,L2) der Energieeinstrahlung erzeugt wird, und deren Strahlungsleistung im Pulsbetrieb angesteuert wird, so daß in der Behältniswandung (1) diskrete Einwirkungsflecken und/oder Absorptionskeime (26) entstehen, und die Einwirkungsdauer der Energieeinstrahlung und/oder die Relativgeschwindigkeit (23,23a) zwischen dem Behältnis und der Strahlungs-Quelle (L,L1,L2) über die Zeit derart variiert werden, daß benachbarte Einwirkungsflecken und/oder Absorptionskeime (26) einander überlappen.

16. Verfahren nach Anspruch 15, dadurch gekennzeichnet, daß die Relativgeschwindigkeit zwischen 100 und 300 Millimeter pro Sekunde beträgt.

17. Verfahren nach Anspruch 15 oder 16, dadurch gekennzeichnet, daß die Relativgeschwindigkeit eine Winkelgeschwindigkeit (ω) ist oder rotatorische und lineare Komponenten aufweist.

18. Verfahren nach Anspruch 15, 16 oder 17, dadurch gekennzeichnet, daß die Frequenz für den Pulsbetrieb drei bis fünf kHz beträgt.

19. Anordnung zum Markieren einer Libelle aus transparentem Kunststoff für eine Wasserwaage zur Herstellung der Libelle nach einem der Ansprüche 1 bis 6 und/oder zur Durchführung des Verfahrens nach einem der Ansprüche 7 bis 18, wobei wenigstens zwei voneinander beabstandete Markierungen (14) durch Energieeinstrahlung mittels elektromagnetischer Wellen, insbesondere mittels Laserstrahlung (8,12,12a), an, auf und/oder in der Wandung (1) eines Libellen-Behältnisses für eine darin schwimmende Libellen-Gasblase erzeugt werden, und eine Laser-Bearbeitungseinrichtung (5) einer der Wandung (1) des Libellen-Behältnisses gegenüberliegt, **dadurch gekennzeichnet, daß** die Laser-Bearbeitungseinrichtung (5) eine Anzahl von Spiegeln oder sonstige Optiken (9) mit je einem von ihr ausgehenden, auf die Wandung (1) gerichteten Laserstrahl (12;21,22) aufweist, und die Spiegel oder Optiken (9) zur Ausführung gemeinsamer Hin- und Herbewegungen (23,23a) eine Kopplung (7) untereinander aufweisen, und ihre Anzahl der Anzahl der beabstandeten Markierungen (14) entspricht.

20. Anordnung nach Anspruch 19, wobei die Wandung (1) des Behältnisses auf ihrer Innen- und/oder Außenseite (2,3) mit einer Ausbauchung oder Krümmung gestaltet ist, die bezüglich der mittleren Querschnittsebene (4) symmetrisch verläuft, gekennzeichnet durch eine Meßeinrichtung (6), die zur Abtastung der Wandungsoberfläche und zur Bestimmung des Scheitelbereichs (Sc) der Krümmung auf der Wandungsaußenseite (2) und/oder des Sohlebereichs (So) der Krümmung auf der Wandungsinnenseite (3) angeordnet und ausgebildet sowie mit den Spiegeln oder Optiken (9) zur Ausführung gemeinsamer Hin- und Herbewegungen (23,23a) über eine Verbindung (7) gekoppelt ist.

21. Anordnung nach Anspruch 20, dadurch gekennzeichnet, daß die Meßeinrichtung (6) ein mechanisches Abtastorgan (15) aufweist, das über Federmittel gegen die Wandungsoberfläche gedrückt und mit einer Meßanzeige (17) gekoppelt ist.

22. Anordnung nach Anspruch 20 oder 21, dadurch gekennzeichnet, daß die Meßeinrichtung (6) mit der Laser-Bearbeitungseinrichtung (5) gekoppelte Steuerungsmittel aufweist, wodurch die Laser-Bearbeitungseinrichtung (5) in einen Betriebszustand zur Reflexion der Laserstrahlen (21,21a,22,22a) von der Wandung (1) und zu deren Absorption (26) in und/oder auf der Wandung (1) parametrisierbar und versetzbar ist, und ferner jeder der Optiken (9) beziehungsweise jedem der davon ausgehenden, reflektierten Laserstrahlen (21,22) ein Photosensor (P1,P2) in einem definierten Abstand zugeordnet ist, an deren Ausgängen eine Auswerteeinheit insbesondere mit einem Vergleichsmodul anliegt.

## Claims

1. Bubble enclosure for a spirit level or other position testing instruments, produced with a container of a transparent plastics material for liquid, wherein at least two spaced markings (14) are applied through the input of light or external energy by means of electromagnetic waves, in particular by means of laser radiation (8, 12, 12a), to, on and/or in the wall (1) of the container for a bubble enclosure gas bubble floating therein, characterised in that the basic body of the container comprises polycarbonate as production material, and two marking regions, which are blackened or darkly contrasting through the input of light or external energy into the basic body, are disposed in the polycarbonate.

2. Bubble enclosure according to Claim 1, characterised in that the marking regions are chemically changed with respect to the polycarbonate original structure of the basic body.

3. Bubble enclosure according to Claim 1 or 2, characterised in that its basic body is interspersed with small light-sensitive pigment bodies.

4. Bubble enclosure according to Claim 3, characterised in that the small pigment bodies consist entirely or in part of carbon black.

5. Bubble enclosure according to Claim 3 or 4, characterised in that the small pigment bodies have a structure which responds to the action of heat and/or light, in particular laser action.

6. Bubble enclosure according to any one of Claims 3 to 5, characterised in that the basic body of the bubble enclosure container comprises acrylonitrile-butadiene-styrene polymers, acrylonitrile-butadiene-styrene polymerisates and/or polymethyl methacrylate instead of polycarbonate as production material.

7. Method for marking a bubble enclosure consisting of a transparent plastics material for a spirit level according to any one of the preceding Claims, in that at least two spaced markings (14) are produced through the input of energy by means of electromagnetic waves, in particular by means of laser radiation (8, 12, 12a), at, on and/or in the wall (1) of the container for a bubble enclosure gas bubble floating therein, characterised by the simultaneous use of a composite arrangement (5, 7; 5a, 21, 22) of at least two energy beams (8, 12), the spacing of which corresponds to that of the markings (14), wherein the composite arrangement (5, 7; 5a, 21, 22) of the two energy beams (8, 12) is positioned symmetrically or equidistantly (A1, A2) in relation to a cross-sectional centre plane (4) of the container.

8. Method according to Claim 7, wherein the wall (1) of the container is shaped on its inside and/or outside (2, 3) with an outward bulge or curvature extending symmetrically in relation to the central cross-sectional plane (4), characterised in that a bottom point or crest (So, Sc) of the curvature is determined by a measuring device (6), and the composite arrangement (5, 8, 12; 5a, 21, 22) of the two energy beams (21, 22) is positioned symmetrically or equidistantly (A1, A2) in relation to the centre plane (4) extending through the bottom point or crest (So, Sc).

9. Method according to Claim 8, characterised in that the measuring device is moved rigidly with the composite beam arrangement (5, 7).

10. Method according to Claim 9, characterised in that in a first phase, in order to reflect (21a, 22a) the energy beams (21, 22), of which there are at least two, at the curved container wall (1), the composite beam arrangement (5, 7; 5a, 21, 22) is operated and moved along the wall, a measuring device with at least two photosensors (P1, P2) is used, these each being disposed at a uniform spacing from one of the energy beams (21, 22) and for sensing a reflected energy beam (21a, 22a), and the composite arrangement (5a, 21, 22) of energy beams (21, 22) is moved to and/or fro (23a) with the photosensors (P1, P2), in each case associated with these, along the curved container wall (1) until the photosensors (P1, P2) indicate beam reflections (21a, 22a) corresponding to or matching one another, and that in a second phase the composite beam arrangement (5a, 21, 22) is arrested with respect to the container wall (1) and operated to absorb (26) and/or to focus the energy beams (21, 22), of which there are at least two, at or in the curved container wall (1).

11. Method according to any one of the preceding Claims, wherein the plastics material is provided at least in regions with pigments (24), characterised in that the length (λ) of the electromagnetic waves and/or the material parameters or material properties of the pigments (24) and/or of the plastics material is/are selected such that the capacity to absorb the energy which is input by the electromagnetic waves is minimum (27) for the plastics material and maximum (28) for the pigments (24).

12. Method according to Claim 11, characterised in that carbon black particles and/or Iriodin® is/are used as pigments and/or particles acting on the surrounding material are used as catalysts.

13. Method according to any one of the preceding Claims, characterised in that organic matter which has a tendency to carbonization or other darkening or discolouration under energy irradiation, also under light irradiation in the ultraviolet or infrared region, is used as plastics material or pigments (24).

14. Method according to any one of the preceding Claims, wherein the energy irradiation is focused by means of an optical system (9) on a certain location (10) of the outer or inner surface (2, 3) or in the wall material of the container wall (1), characterised in that the location (10) is initially irradiated with a high power density until an absorption nucleus (26) results, and the power density is then varied or reduced to discolour the location (10).

15. Method according to any one of the preceding Claims, characterised in that a relative movement between the container and a source (L, L1, L2) of the energy irradiation is produced, and the radiation power thereof is controlled in pulsed operation, so that discrete action spots and/or absorption nuclei (26) arise in the container wall (1), and the duration of the action of the energy irradiation and/or the relative velocity (23, 23a) between the container and the radiation source (L, L1, L2) is/are varied over time such that adjacent action spots and/or absorption nuclei (26) overlap.

16. Method according to Claim 15, characterised in that the relative velocity is between 100 and 300 millimetres per second.

17. Method according to Claim 15 or 16, characterised in that the relative velocity is an angular velocity (ω) or comprises rotatory and linear components.

18. Method according to Claim 15, 16 or 17, characterised in that the frequency for the pulsed operation is three to five kHz.

19. Arrangement for marking a bubble enclosure of a transparent plastics material for a spirit level for producing the bubble enclosure according to any one of Claims 1 to 6 and/or for carrying out the method according to any one of Claims 7 to 18, wherein at least two spaced markings (14) are produced through energy irradiation by means of electromagnetic waves, in particular by means of laser radiation (8, 12, 12a), at, on and/or in the wall (1) of a bubble enclosure container for a bubble enclosure gas bubble floating therein, and a laser processing device (5) lies opposite the wall (1) of the bubble enclosure container, characterised in that the laser processing device (5) comprises a number of mirrors or other optical systems (9) with a respective laser beam (12; 21, 22) coming from the latter and directed at the wall (1), and the mirrors or optical systems (9) are coupled together (7) to execute joint to-and-fro movements (23, 23a) and correspond in number to the spaced markings (14).

20. Arrangement according to Claim 19, wherein the wall (1) of the container is shaped on its inside and/or outside (2, 3) with an outward bulge or curvature extending symmetrically in relation to the central cross-sectional plane (4), characterised by a measuring device (6), which is disposed and formed to scan the wall surface and to determine the crest region (Sc) of the curvature on the outside (2) of the wall and/or the bottom region (So) of the curvature on the inside (3) of the wall and is coupled via a connection (7) to the mirrors or optical systems (9) to execute joint to-and-fro movements (23, 23a).

21. Arrangement according to Claim 20, characterised in that the measuring device (6) comprises a mechanical scanning member (15), which is pressed via spring means against the wall surface and coupled to a measurement display (17).

22. Arrangement according to Claim 20 or 21, characterised in that the measuring device (6) comprises control means which are coupled to the laser processing device (5), whereby the laser processing device (5) can be parameterized and brought into an operating state to reflect the laser beams (21, 21a, 22, 22a) from the wall (1) and absorb (26) them in and/or on the wall (1), and a photosensor (P1, P2) is associated at a defined spacing with each of the optical systems (9) or each of the reflected laser beams (21, 22) coming from them, to the outputs of which sensors an evaluation unit, in particular with a comparison module, is applied.

## Revendications

1. Nivelle pour un niveau à bulles ou d'autres instruments de contrôle de position, formés d'un récipient à liquide réalisé en une matière plastique transparente, et dans laquelle au moins deux marques (14) distantes l'une de l'autre sont disposées sur et/ou dans la paroi (1) du récipient pour une bulle de gaz de la nivelle, qui flotte dans le récipient, au moyen d'une introduction de lumière ou d'une introduction d'énergie externe à l'aide d'ondes électromagnétiques, notamment à l'aide d'un rayonnement laser (8, 12, 12a), caractérisé en ce que le corps de base du récipient comporte du polycarbonate comme matériau de fabrication et que deux zones de mesure, qui sont noircies par introduction de lumière ou introduction d'une énergie externe dans le corps de base ou présentent un contraste sombre, sont disposées dans le polycarbonate.

2. Nivelle selon la revendication 1, caractérisée en ce que les zones de mesure sont modifiées chimiquement par rapport à la structure de sortie à polycarbonate du corps de base.

3. Nivelle selon la revendication 1 ou 2 caractérisée en ce que son corps de base est traversé par des particules de pigment photosensibles.

4. Nivelle selon la revendication 3, caractérisée en ce que les particules de pigment sont constituées entièrement ou partiellement par de la suie.

5. Nivelle selon la revendication 3 ou 4, caractérisée en ce que les particules de pigments possèdent une structure qui répond à une action de chaleur et/ou une action de lumière, notamment l'action d'un laser.

6. Nivelle selon l'une des revendications 3 à 5, caractérisée en ce que le corps de base du récipient de la nivelle comporte, à la place du polycarbonate comme matériau de base, des polymères acrylonitrile-butadiène-styrène, des polymérisats d'acrylonitrile-butadiène-styrène et/ou du polyméthylméthacrylate.

7. Procédé pour marquer une nivelle formée d'une matière plastique transparente pour un niveau à bulle selon l'une des revendications précédentes, selon lequel au moins deux marques (14) distantes l'une de l'autre, sont produites par introduction d'énergie, à l'aide d'ondes électromagnétiques, notamment à l'aide d'un rayonnement laser (8, 12, 12a) sur et/ou dans la paroi (1) du récipient pour une bulle d'air, qui flotte dans ce récipient, de la nivelle, caractérisé par l'utilisation simultanée d'un ensemble composite (5, 7 ; 5a, 21, 22) d'au moins deux faisceaux d'énergie (8, 12), dont la distance correspond à celle séparant les marques (14), l'ensemble composite (5, 7) produisant les deux faisceaux d'énergie (8, 12) étant positionné symétriquement ou d'une manière équidistante (A1, A2) par rapport à un plan médian de section transversale (4) du récipient.

8. Procédé selon la revendication 7, selon lequel la paroi (1) du récipient comporte sur son côté intérieur et/ou extérieur (2, 3), un renflement ou une courbure, qui s'étend symétriquement par rapport au plan médian en coupe transversale (4), caractérisé en ce qu'on détermine un point de base ou un point sommital (So, Sc) à l'aide d'un dispositif de mesure (6) et on positionne l'ensemble combiné (5, 8, 12; Sa, 21, 22) produisant les deux faisceaux d'énergie (21, 22) d'une manière symétrique ou équidistance (A1, A2) par rapport au plan médian (4) qui passe par le point de base ou le point sommital (So, Sc).

9. Procédé selon la revendication 8, caractérisé en ce que le dispositif de mesure est entraîné conjointement solidairement de l'ensemble composite (5, 7) produisant les faisceaux

10. Procédé selon la revendication 9, caractérisé en ce que lors d'une première phase, on entraîne l'ensemble combiné (5, 7; 5a, 21, 22) produisant les faisceaux pour provoquer la réflexion (21a, 22a) des au moins deux faisceaux d'énergie (21, 22) sur la partie cintrée (1) du récipient et on le déplace le long de cette paroi, qu'on utilise un dispositif de mesure comportant au moins deux capteurs photosensibles (P1, P2), qui sont disposés respectivement par rapport à l'un des faisceaux d'énergie (21, 22) à une distance uniforme et servent à recevoir un faisceau d'énergie réfléchi (21a, 22a), et on déplace en va-et-vient (23a) l'ensemble combiné (5a, 21, 22) produisant les faisceaux d'énergie (21, 22) avec les capteurs photosensibles (P1, P2) qui leur sont respectivement associés, le long de la paroi cintrée (1) du récipient, jusqu'à ce que les détecteurs photosensibles (P1, P2) signalent des réflexions de rayonnement (21a, 22b), qui se correspondent ou coïncident entre elles, et que lors d'une seconde phase, on arrête le dispositif combiné (5a, 21, 22) produisant les faisceaux, par rapport à la paroi (1) du récipient et on le fait fonctionner pour réaliser une absorption (26) et/ou une focalisation et au moins deux faisceaux d'énergie (21, 22) sur ou dans la paroi cintrée (1) du récipient.

11. Procédé selon l'une des revendications précédentes, selon lequel la matière plastique comporte au moins par endroits, des pigments (24), caractérisé en ce qu'on choisit la longueur (λ) des ondes électromagnétiques et/ou les paramètres du matériau ou les caractéristiques des matériaux des pigments (24) et/ou de la matière plastique de manière que la capacité d'absorption de l'énergie introduite par les ondes électromagnétiques est égale à un minimum (27) pour une matière plastique et à un maximum (28) pour les pigments (24).

12. Procédé selon la revendication 11, caractérisé en ce qu'on utilise comme pigments, des particules de suie et/ou de l'Iriodin® et/ou, comme catalyseur, des particules agissant sur le matériau alentour.

13. Procédé selon l'une des revendications précédentes, caractérisé en ce qu'on utilise comme matière plastique ou comme pigments (24), des substances organiques qui, lors de l'application d'une énergie et même lors d'une irradiation par un rayonnement dans la gamme de l'infrarouge ou de l'ultraviolet, ont tendance à noircir ou sinon à devenir sombre ou à se colorer.

14. Procédé selon l'une des revendications précédentes, selon lequel à l'aide d'un système optique (9), on focalise le rayonnement d'énergie en un emplacement déterminé (10) de la surface extérieure ou intérieure (2, 3) ou dans le matériau de la paroi (1) du récipient, caractérisé en ce qu'on irradie initialement l'emplacement (10) avec une densité de puissance élevée jusqu'à ce qu'il apparaisse un germe d'absorption (26), et on modifie ou on réduit alors la densité de puissance pour colorer l'objet (10).

15. Procédé selon l'une des revendications précédentes, caractérisé en ce qu'on produit un déplacement relatif entre le récipient et une source (L, L1, L2) du rayonnement d'énergie et qu'on règle sa puissance de rayonnement selon un fonctionnement impulsionnel de sorte que des plages d'action et/ou des germes d'absorption (26) discrets apparaissent dans la paroi (1) du récipient, et qu'on modifie dans le temps la durée d'action du rayonnement d'énergie et/ou la vitesse relative (23, 23a) entre le récipient et la source de rayonnement (L, Ll, L2) de telle sorte que des spots voisins d'action et/ou des germes d'absorption (26) se chevauchent.

16. Procédé selon la revendication 15, caractérisé en ce que la vitesse relative est comprise entre 100 et 300 millimètres par seconde.

17. Procédé selon la revendication 15 ou 16, caractérisé en ce que la vitesse relative est une vitesse angulaire (ω) ou possède une composante rotative et une composante linéaire.

18. Procédé selon la revendication 15, 16 ou 17, caractérisé en ce que la fréquence pour le fonctionnement impulsionnel est comprise entre trois et cinq kHz.

19. Dispositif pour marquer une nivelle formée d'une matière plastique transparente pour un niveau à bulle pour réaliser la nivelle selon l'une des revendications 1 à 6, et/ou pour mettre en oeuvre le procédé selon l'une des revendications 7 à 18, selon lequel on produit au moins deux marques (14) distantes l'une de l'autre, par application d'une énergie d'ondes électromagnétiques, notamment à l'aide de faisceaux laser (8, 12, 12a) sur et/ou dans la paroi (1) d'un récipient de nivelle pour une bulle de gaz, qui flotte dans ce récipient, et on met en place un dispositif d'usinage par laser (5) vis-à-vis d'une paroi (1) d'un récipient de nivelle, caractérisé en ce que le dispositif d'usinage par laser (5) possède un certain nombre de miroirs ou d'autres systèmes optiques (9), comportant chacun un faisceau laser (12, 21, 22) qui part de ces dispositifs et est dirigé sur la paroi (1), et que les miroirs ou les systèmes optiques (9) comportent, pour l'exécution de déplacements en va-et-vient communs (23, 23a), un accouplement (7) qui les relie, et leur nombre correspondant au nombre des marques distantes (14).

20. Dispositif selon la revendication 19, dans lequel la paroi (1) du récipient est agencé, au niveau de son côté intérieur et/ou extérieur (2, 3), avec un renflement ou une courbure, qui est symétrique par rapport au plan médian transversal (4), caractérisé par un dispositif de mesure (6), qui est disposé et agencé pour explorer la surface de la paroi et pour déterminer la partie sommitale (Sc) de la courbure sur la face extérieure (2) de la paroi et/ou la partie de base (So) de la courbure sur le côté intérieur (3) de la paroi et est couplé aux miroirs ou aux systèmes optiques (9) pour l'exécution de déplacements communs en va-et-vient (23, 23a) par l'intermédiaire d'une liaison (7).

21. Dispositif selon la revendication 20, caractérisé en ce que le dispositif de mesure (6) possède un organe d'exploration mécanique (15), est repoussé par des moyens formant ressorts contre la surface de la paroi et est couplé à un dispositif d'affichage de mesure (17).

22. Dispositif selon la revendication 20 ou 21, caractérisé en ce que le dispositif de mesure (6) comporte des moyens de commande couplés au dispositif d'usinage par laser (5), ce qui a pour effet que le dispositif d'usinage par laser (5) peut être maîtrisé et décalé dans/sur la paroi (1) dans un état de fonctionnement servant à réfléchir les faisceaux laser (21, 21a, 22, 22a) à partir de la paroi (1) et pour obtenir l'absorption (26) des faisceaux, et en outre chacun des systèmes optiques (9) ou chacun des faisceaux laser réfléchis (21, 22) partant de ces systèmes optiques est associé, à une distance définie, à un détecteur photosensible (P1, P2), aux sorties desquels est raccordée une unité d'évaluation comportant un module de comparaison.
